# EUROPEAN PATENT APPLICATION

(11) **EP 1 775 662 A1**
(43) Date of publication of application: **18.04.2007**
(21) Application number: 05292177.2
(22) Date of filing: 14.10.2005
(51) Int. Cl.: G06F 17/30

(54) **Method and computer system for allowing a user to access information content**

(71) Applicant: Exalead, 75008 Paris (FR)
(72) Inventor: Bourdoncle, François, 75014 Paris (FR); Lagunas, François, 94340 Joinville-Le-Pont (FR)
(74) Representative: Hirsch & Associés

(57) **Abstract**

The invention is directed to a method and computer system for allowing a user of a computer system to access information content. The method comprises:
- receiving (S12) from a user a first query;
- according to the first query, obtaining (S 14) a list of search services;
- selecting (S16) at least one search service among the list;
- launching (S20) a search based on a second query using the selected at least one search service; and
- returning (S22) to the user results of the second query, the results allowing the user to access information content.

The invention further proposes a computer program product implementing said method and a graphical user interface allowing a user to take steps according to the method.

## Description

The invention relates to the field of access to information content, and more specifically to displaying information content results retrieved from search queries, as well as navigating and inputting requests to intranet, extranet and/or the Internet.

Throughout the present specification, the following definitions are assumed, unless otherwise mentioned.

A website (or site), is a collection of web pages, that is, HTML/XHTML documents accessible generally via the HTTP protocol, on the Internet, mostly though the World Wide Web (also WWW or Web), which operates over the Internet. The pages of a website are accessed from a common root URL (universal resource locator) to the homepage, and usually reside on the same physical server. The URLs of the pages organize them into a hierarchy. Hyperlinks (or links) between them allow the user to navigate over the WWW.

A web page is displayed to the end-user in a web browser as a single page.. A browser is a software application that enables a user to display and interact with documents in the web, that is, hosted by web servers or held in a file system. Popular browser are the one provided by Microsoft Corporation under the trademark Internet Explorer or the one provided by Netscape Corporation under the trademark Netscape Navigator.

The page may be comprised of several frames; in this case, the page displayed to the user is a collection of different files: one file may then describe the various frames of the page and their location and one file per frame comprises the HTML content of the frame. A web page may also comprise a number of links to various types of documents, in the form of URLs embedded in the page. The links may bring the user to HTML pages, to audio or video files, or to other linked files.

A number of web search services are known.

For example, a search engine is a program designed to help find information stored on a computer system such as the WWW, a database, or a personal computer. A search engine allows one to ask for content meeting specific criteria such as given in a word or phrase and is adapted to retrieve a list of references matching said criteria. Search engines use regularly updated indexes to operate quickly and efficiently. Typically, a search engine works by sending out a spider to fetch as many documents as possible to extract information. Another program, called an indexer, then reads these documents and creates an index based on the words contained in each document. Search engines use proprietary algorithms to create indices such that, ideally, only meaningful results are returned for each query. A search engine may else work by synchronizing to a database. Metadata can further be used.

Several search engines have been developed for retrieving information on the Internet. For instance, the Alta Vista Company proposed an Internet search site, with a request box where the user may input keywords for retrieving information. More recently, Google Inc. proposed a searching tool for searching html files or text documents (in the PDF, Microsoft Word or RTF formats) available through the Interned. The results are returned to the user as a list of web pages. Each result is displayed as a URL, together with an abstract of the document accessible through the URL. The abstract is an extract of sentences or part of sentences of the document. If a web page is comprised of frames, the result returned to the user may be the URL of the frame, together with an abstract of the frame. Each frame is therefore searched and handled individually by the engine.

More generally, a web search engine, such as Google and MSN search (trademark) provides a way to access information content from an unique index. In particular, they do provide access to information entries that are accessible from a remote computer, for example through the HTTP, FTP or NNTP protocols.

As of today development of the Internet and the WWW makes that when inputting keywords in for retrieving information, a user is often returned a very large number of information entries. For example, inputting keywords such as "Nobel prize" in a popular search engine may return several millions of entries. One understands that such a number of entries is not manageable by the user. The user therefore needs to refine his search through successive queries, using additional keywords.

Other searching tools exist for searching and retrieving information on the Internet. In particular, aside from search engines are also known web directories, which are directories on the WWW that specialize in linking to other web sites and categorizing those links. Web directories often allow site owners to submit their site for inclusion. For example, Yahoo! (trademark) is a computer services company which operates an Internet portal, a web directory and a host of other services including the e-mail services. Web directories often make use of search engine technologies. As regards more particularly the web directory, there is again provided a request box. Results of a search inputted to the request box are displayed in several sections. The first section displays the category matches, together with the path to the matches in the category tree, while the second section displays site matches. The third section displays web pages. Google Inc also provides an Internet site for search among sites and categories. The results of a search contain an indication of the classification of sites and categories. Selecting the category search provides the user with a list of categories that may relate to the search; the contents of each category may later be accessed. Consider the following example: a user wishes to retrieve information on the "Nobel prize". A possible working path of categories to reach documents addressing that subject is the following: Society > Philanthropy > Grants > Grant-Making Foundations > Nobel Foundation. Descending successive fixed categories may however not work, depending on users skills or how the user perceive the classification of the target information. For example, the user may try the following path: Society > Issues > Science and Technology and reach new categories (e.g. Anti-Metrication, Biology, Biotechnology, Cell Phones, etc.) which prima facie do not cover the target information. Yet, related (fixed) categories are displayed which might help the user in its search. Hence, the user may revert to the "input keyword" method, whereby a direct search in the request box of the Google directory returns several thousands of results.

Basically, category search is adapted to searching among sites while keyword searches are more adapted to searching among separate textual documents. Intermediate approaches are known.

For instance, EP 1 182 581 discloses a method in which a database of entries, such as Web pages and sites is provided. The entries are at least partially mapped to a set of predetermined categories. The entries are also associated with keywords, for instance by automatic indexing of documents. In response to a query into the database, a user is provided with a series of refinement strategies, in addition to search results. Refinement strategies comprise categories relevant for the search, selected among the set of predetermined categories. Refinement strategies also include keywords dynamically selected among keywords associated with the entries. The user may easily navigate among the results to the query, and formulate new queries. This solution offers an information retrieving process and tool, that enables a user to navigate not only among fixed categories, but also among keywords, in a friendly and transparent fashion. It further combines the advantages of a set of human-made categories - notably expertise in a given field - together with the advantages of a keyword search - notably the ability to process and handle documents outside of said given field -. The proposed tool is, in addition, well adapted to searching among a database of sites and separate documents or pages.

However this does not allow for searching in the "hidden web" which is contained in databases that can only be accessed via specific search forms and thus cannot be crawled. This may also happen when these databases can be only accessed by registered users.

Next, a web portal is a web site that provides a starting point, a gateway, or portal, to other resources on the Internet or an intranet. Portals typically provide personalized capabilities to their users. Web portals may have various purposes such as Business-to-employee, or business-to-customer/consumer, etc.

Also known is the electronic commerce (or e-commerce), which primarily consists of the distributing, buying, selling, marketing, and servicing of products or services over electronic systems such as the Internet and other computer networks. It can involve electronic funds transfer, supply chain management, e-marketing, online marketing, online transaction processing, electronic data interchange, automated inventory management systems, automated data-collection systems, etc. It typically uses technology such as the Internet, extranets, e-mail, Ebooks, databases, and mobile phones.

Both web portals and e-commerce sites usually provides help through search facilities, for example search engines as described above.

Basically, in the case of category search, navigation through fixed categories is not always convenient for the user, while in the case of keyword searches, the number of returned documents does often not offer a tractable way of reaching information the most relevant to the user. The user therefore needs to refine his search through successive queries, using additional keywords. In addition, though the results of the queries are ordered by relevance with respect to the queries, the ordering usually not corresponds to how the users conceives them.

There is therefore a need for a method and computer system allowing a user to tractably access information content. The underlying method should further allow for searching in the "hidden web" which is contained in databases accessible by specific search forms or by registered users only.

To this aim, the invention proposes a method for allowing a user of a computer system to access information content, comprising: receiving from a user a first query; according to the first query, obtaining a list of search services; selecting at least one search service among the list; launching a search based on a second query using the selected at least one search service; and returning to the user results of the second query, the results allowing the user to access information content.

In other embodiments, the method according to the invention may comprise one or more of the following features:
- the step of obtaining the list of search services comprises returning to the user the list of search services, according to the first query; and the step of selecting the at least one search service comprises receiving from the user a selection of the at least one search service;
- at the step of launching the second query, said second query is based on the first query;
- the method further comprises, after the step of selecting the at least one search service and before the step of launching the second query, a step of receiving from the user the second query;
- the results returned comprise a list of entries, the method further comprising steps of: receiving from the user a selection of a particular entry of the list of entries; and redirecting the user according to the selected entry;
- the step of redirecting comprises redirecting the user to a subscription menu or a buy button if the selected entry corresponds to restricted-access information content;
- at least one of the search services is related to an internet portal or an electronic commerce web site;
- the method further comprises an initial step of: providing the user with a graphical user interface, comprising: a query box; a first display area for displaying search services; and a second display area for displaying returned results; wherein the user interface allowing the user to select and browse the returned results;
- the user interface is configurable according to user selections within the second area;
- the user interface is adapted to provide access to a browser-based application designed for implementing steps of the method;
- the method further comprises a step of: launching another search based on a further query, using the selected at least one search service;
- the step of obtaining a list of search services comprises searching search services using a same communication protocol;
- the step of obtaining a list of search services comprises searching search services using a same search engine;
- the step of obtaining a list of search services comprises ordering the search services according to a method of sponsored listings; and
- the step of returning the results comprises ordering the results according to the selected at least one search service.

The invention further concerns a computer program product implementing the method according to the invention and a graphical user interface, allowing a user to take steps according to the method of the invention.

The invention is also directed to a computer system for allowing access to information content, comprising: a directory of search services, a search service being suitable for retrieving information content according to a query; and a search engine adapted for searching in the directory and retrieving a list of search services according to a query of a user. Preferably, said computer system further comprises a component software adapted to read a selection by a user of at least one search service among the list and to forward a query to said at least one search service.

Various embodiments of the invention are now discussed, in reference to the drawings, in which:
- FIG. 1 is a flowchart illustrating steps of the method of the invention, according to an embodiment;
- FIG. 2 shows a graphical user interface allowing a user to take steps according to the method of the flowchart of FIG. 1, as appearing at a given step of the method; and
- FIG. 3 shows the graphical user interface of FIG. 2, as appearing at a subsequent step of the method.

The invention hence proposes a method for allowing a user of a computer system to access information content. Said method primarily decomposes in two main steps. The first main step comprises a step of receiving from a user a first query. Then, according to the first query, it is obtained a list of search services or, equivalently, a list of web sites operating search services. At least one search service is next selected in the list, for example by the user him/herself. In a second main step, it is launched a search based on a second query and this, using the selected at least one search service. Results of the second query are then returned to the user. Said results are typically entries, which allow the user to access a respective information content. This two-steps process allows to considerably enhance both the tractability and relevance of the returned results. The relevance of the results for the user is even more significant when the at least one search service is selected by the user or according to user options, preferences, statistics, etc. The above method therefore extend search functionality in a delocalized way, through the reuse of existing search facilities. Hence pages that belong to the hidden web may be accessed through convenient search facilities, which are themselves likely to be selected according to the method above.

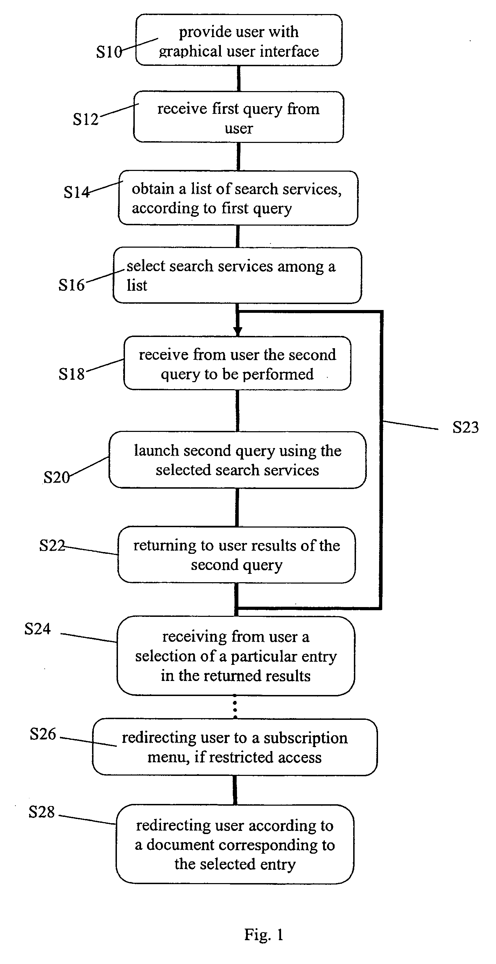

FIG. 1 is a flowchart illustrating steps of the method of the invention, according to an embodiment.

In reference to FIG. 1, the method may comprise a first step S10 of providing a user with a graphical user interface or GUI.

Said GUI is typically a web browser GUI, having usual menu bars that contain a set of user-selectable icons, each icon being associated with one or more operations or functions, as known in the art. Said GUI further provides features such as a bookmark manager, caching of web contents and supports media types via plugins. In particular, said GUI may comprise a query box, a first display area for displaying search services to be obtained and a second display area for displaying target results, as will be explained below. In a variant said first and second areas may be a unique display area. The user interface further allows the user to select and browse the returned results.

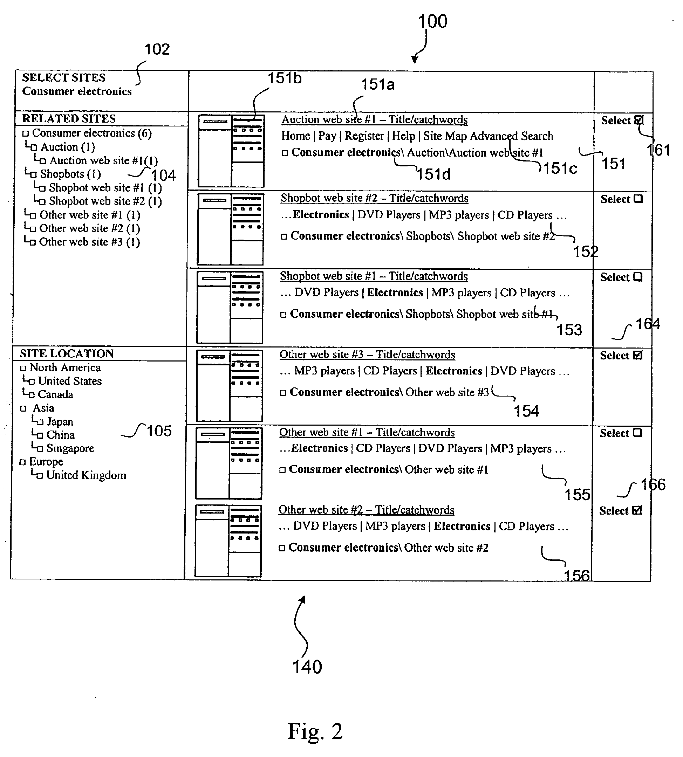

The user makes a first query, e.g. by inputting one or more keywords in a dedicated box of the GUI. For example, the user may input "consumer electronics", as will be later exemplified in reference to figure 2. Various types of queries may else be contemplated, such as dates, price, and any kind of category and/or meta information (author, type of media etc).

At step S12, said keywords are received by a server.

The server then proceeds to obtain a list of search services, according to the first query (step S 14).

In this respect, the server may for example access a given URL or a given local entry point file, wherein a directory is available. Said directory may contain descriptions of search services. For example, a search service (internet portal, search engine or web directory) of a home furnishings retailer indexed in said directory may be associated with a description comprising the following keywords: design, furniture, self-assembly furniture, flat-pack, bookcase etc. Similarly, a search service of a provider/retailer of consumer electronics may be associated with keywords: consumer electronics, telephone, audio equipment, television, calculator, playback/recording, VCR, DVD, MP3, etc.. Then, the server call a search engine for comparing keywords of the first query of the user with respective descriptions of the search services contained in said directory. Then, search services whose descriptions match the first query are returned via the server to the GUI. In the above example, a service of a provider/retailer of consumer electronics is likely to be returned. Any matching technique could be contemplated.

The method may optionally include a step of ordering the returned search services, e.g. by relevance, according to the keywords of the first query.

The order may else be based on a method of sponsored listings. For example, the order can be defined according to a decreasing bid for each search service on the given first query.

As a result of said steps, the ways to access the relevant information are filtered, which will later prevent from obtaining a too large number of results.

Next, one or more search service is selected, for example by the user and this, from the GUI. Said selection is echoed in the server, which in turn proceeds to select said search services (step S16). In this respect, the GUI may comprise a first display area for displaying the search services.

The above steps are now discussed in reference to FIG.2, which shows a simplified GUI, in an embodiment. In reference to FIG.2, the GUI 100 comprises a query box 102, a first display area 104 for displaying search services and a second display area 106 for displaying target results.

In the present case, the user has inputted the keywords "consumer electronics" in the box 102, which resulted in displaying related search services in the area 104, here as a tree structure. If necessary, the tree structure may be browsed so as to select a convenient leave (for example "consumer electronics"). Related search services may further be displayed at the same time in the second area 106, as a list 140 of entries 151 - 156. Each entry may itself decompose as various items, see for example items 151 a-d of entry 151. Here the first item 151 a comprises a title and catchword, as usual in the art. The second item 151b consists of a thumbnail image, the third item 151c is an extract of a main page of the search service or a related site, said extract possibly comprising the inputted keywords. The last item 151d reflects the pathway to the search service, according to the tree structure represented in area 104.

The user who wishes now to select given search services may for example click the checkbox buttons 161, 163, 166 in the vicinity of the respective entries 151, 153, 156 and next click a submit button. The interface 100 represented in FIG. 2 is hence adapted to implement steps S 12 - S 16 discussed above.

In addition, selection of either item 151a or thumbnail 151 b may redirect the user to an associated web page. Also, the GUI 100 may comprise a further area 105, wherein different geographical areas are displayed, which may be browsed so as to restrict the selection of search services to specific geographical areas.

In an alternative embodiment, the server may proceed to directly select convenient search services (instead of it being performed by the user), based on best-matching comparison with the first query or best-matching sponsor.

For example, only one search service may be chosen randomly, yet according to a probability proportional to the amount of its bid for the given query. The underlying method may also choose a small number of search services in a same way.

In either case, the selected search service better match consumer's habits, so that the relevance of the final results will be improved. Further, the problems of web search is hence delocalized to external search device, as achieved by some meta search engines. Yet, in the present case, arbitrariness in the choice of external search services is substantially decreased, since said services are chosen by the user or based on a query of the user.

Referring back to the flowchart of FIG. 1, the user, for example looking for a particular information content or product , inputs a second query. The user may for instance type "MP3 player" in the same query box of the GUI as used for the first query. The server can hence receive (step S 18) and forward the second query to the previously selected search services, so as to launch (step S20) a search based on said second query.

At step S22, results of the search are returned, via the server, to the GUI. Said results may comprise an URL, and a short extract, as known in the art. These are preferably sorted according to the previous selection of search services.

For example, the average density of results for a given search service within the whole set of result may be chosen proportional to its bid for the query. At the same time, the method will guarantee that results from the highest bid may be displayed first.

In a variant, the returned results may simply be independently sorted according to their relevance with respect to the second query

Typically, the number of entries returned amounts to the number of entries that would be returned from the specialized portal or e-commerce previously selected. However, thanks to the previous steps of selection of the search services, the number of entries returned is tractable. The user can thus reach the relevant information content in a very few steps.

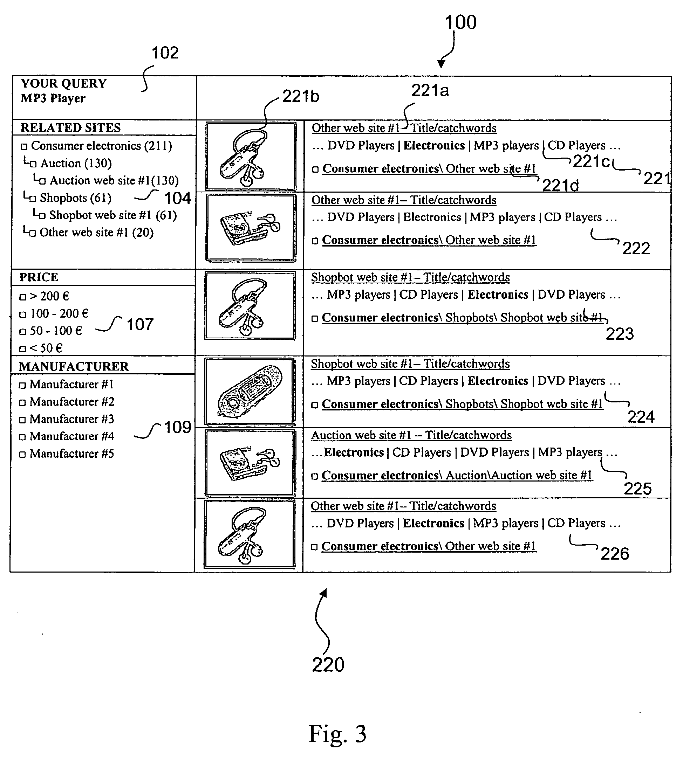

The steps S18 - S22 are now discussed in reference to FIG. 3, which represents the same GUI as in FIG. 2, at a subsequent stage. In reference to FIG. 3, the GUI 100 still comprises the query box 102, the first display area 104 and the second display area 106.

After the selection of the search services, the user has inputted keywords "MP3 player" (see 102) as a second query. This has resulted in returning a list 220 of results in the area 106 of the GUI. The previously selected search services still appear as a tree structure in area 104, while non-selected services have been skipped. The results 220 are displayed in the second area 106 as a list 220 of entries 221 - 226, each decomposing as items 221 a-d, similar in spirit to those 151 a-d discussed in reference to FIG. 1. For example, the thumbnail 151b shows a small picture of a MP3 player, corresponding to the second query. The interface 100 of FIG. 2 is thus suitable for implementation of steps S18 - S22 discussed in reference to FIG. 1.

Then, the user who wishes to be redirected according to a returned entry (or an item thereof) may select the associated link. For example, clicking the title item 221 a may redirect the user to the home page of the e-commerce concerned; clicking the thumbnail 221b may redirect the user directly to a buy page, for effecting a transaction, etc. Such steps will be discussed more in details now, referring back to the flowchart of FIG. 1hence, the user may select a particular entry of the list of entries returned (S22) and subsequently be redirected, according to the selected entry, to the corresponding URL by the server (step S24, S28). If necessary, the user might be redirected to a subscription menu, a buy button, or the like if the selected entry corresponds to restricted-access information content, that is, if said content has a limitation placed by an authority on access thereto. The user might further be redirected to a buy page, as discussed above. In an embodiment, a buy button or any tag indicating a restricted access may be displayed in the GUI, next to the corresponding entry, allowing the user to directly access a convenient subscription page (or the like).

Preferably, the GUI is configurable according to user selections within the second area. For example, upon selection of an entry returned by the server, the GUI will make the corresponding search service the default service or one of the default search services, ready for use. In addition, based on statistics of the user, the GUI may preset default search services, readily operable for a subsequent query. Accordingly, in a subsequent query (step S23), the user does not have to proceed to the two-steps query, that is, the user can directly input a further (second) query, as received at step S 18. The server can thus subsequently launch a search using the already selected search services. Yet, the GUI is preferably designed so as to allow the user to refine or rework the previous selection of search services.

Preferably also, the search services made available to the user are chosen according to the communication protocols they use (for example same or compatible protocols), in order to speed-up transfers. Said search services may even be chosen such that they use the same or compatible search engine. Format problems for accessing and rendering information content results are thereby prevented.

The invention is further directed to a computer system for allowing access to information content. Said computer system notably comprises a directory of search services and a search engine adapted for searching in the directory and retrieving a list of search services according to a query of a user.

The system may for example comprise a component software adapted to read a selection by a user of at least one search service among the list and to forward a second query to said at least one search service, as described before. A convenient program is developed to achieve this and, more generally, to make it possible to implement the method according to the invention.

Preferably, the computer system is designed such that the latency between the directory of search services and the search engine is less than 1 millisecond, as for example can be achieved within local area network. Requests efficiency is thereby improved.

Preferably also, the directory of search services is structured such that a hierarchy exists in the directory. Searching the directory can thus be accordingly adapted and optimized.

In an embodiment and as an example of a practical implementation, said computer system may comprise a single web server, which associates to an URL the related web pages. One of these pages contains a query form, which allow the user to send its initial query to the server. Then, this query is used to select some search services, as described earlier. Then, a web page is built and send to the user. It contains a list of search services which are user selectable, for example using some HTML checkboxes, a second query form, and a submit button. The user can then select or deselect some search services, and enter a query in the second query form.

When the user clicks on the submit button, the state of the checkboxes is sent back to the server. The server uses a protocol, for example XML in a http query, to send the query to the selected search services, and to receive the results from the search services. The server then merges the results, build a HTML page containing the results and send it back to the user.

The invention was disclosed in the present description in reference to Internet searches, the results of the search being documents and web sites of the World Wide Web. The invention applies more generally to searches among any type of indexed or non-indexed database, contacted by said program, provided a number of keywords may be associated to entries of the database. In this respect, the World Wide Web is a paradigm of a database, while indexed documents or web sites are paradigms of database entries. In the embodiment of the invention disclosed in the accompanying drawings, there is suggested to display a list of search services returned by the first query; the invention may actually be carried out by displaying refinement strategies to the user.

## Claims

1. A method for allowing a user of a computer system to access information content, comprising:
- receiving (S12) from a user a first query;
- according to the first query, obtaining (S14) a list (140) of search services (151-156);
- selecting (S16) at least one search service (151, 154, 156) among the list (140);
- launching (S20) a search based on a second query using the selected at least one search service (151, 154, 156); and
- returning (S22) to the user results (220) of the second query, the results allowing the user to access information content.

2. The method of claim 1, wherein
- the step of obtaining (S14) the list (140) of search services comprises returning to the user the list (140) of search services (151-156), according to the first query; and
- the step of selecting (S16) the at least one search service (151, 154, 156) comprises receiving from the user a selection (161, 164, 166) of the at least one search service.

3. The method of claim 1 or 2, wherein, at the step of launching (S20) the second query, said second query is based on the first query.

4. The method of claim 1 or 2, further comprising, after the step of selecting (S16) the at least one search service and before the step of launching (S20) the second query, a step of
- receiving (S 18) from the user the second query.

5. The method according to any one of claims 1 to 4, wherein the results (220) returned comprise a list of entries (221 - 226), the method further comprising steps of:
- receiving (S24) from the user a selection of a particular entry of the list of entries; and
- redirecting (S26) the user according to the selected entry.

6. The method according to claim 5, wherein the step of redirecting (S26) comprises redirecting the user to a subscription menu or a buy button if the selected entry corresponds to restricted-access information content.

7. The method according to any one of claims 1 to 6, wherein at least one of the search services is related to an internet portal or an electronic commerce web site.

8. The method according to any one of claims 1 to 7, further comprising an initial step of:
- providing (S10) the user with a graphical user interface (100), comprising:
- a query box (102);
- a first display area (104) for displaying search services; and
- a second display area (106) for displaying returned results;
wherein the user interface allowing the user to select and browse the returned results.

9. The method according to claim 8, wherein the user interface (100) is configurable according to user selections within the second area (106).

10. The method according to claim 9, wherein the user interface (100) is adapted to provide access to a browser-based application designed for implementing steps of the method.

11. The method according to any one of claims 1 to 10, further comprising a step of:
- launching (S23) another search based on a further query, using the selected at least one search service (151, 154, 156).

12. The method according to any one of claims 1 to 11, wherein the step of obtaining (S14) a list (140) of search services (151-156) comprises searching search services using a same communication protocol.

13. The method according to claim 12, wherein the step of obtaining (S 14) a list (140) of search services (151-156) comprises searching search services using a same search engine.

14. The method according to any one of claims 1 to 13, wherein the step of obtaining (S 14) a list (140) of search services (151-156) comprises ordering the search services according to a method of sponsored listings.

15. The method according to any one of claims 1 to 14, wherein the step of returning (S22) the results (220) comprises ordering the results according to the selected at least one search service.

16. A computer program product implementing the method of any one of claims 1 to 15.

17. A graphical user interface (100), allowing a user to take steps according to the method of anyone of claims 1 to 15.

18. A computer system for allowing access to information content, comprising:
- a directory of search services (151-156), a search service being suitable for retrieving information content according to a query; and
- a search engine adapted for searching in the directory and retrieving a list (140) of search services (151-156) according to a query of a user.

19. The computer system of claim 18, further comprising
- a component software adapted to read a selection by a user of at least one search service among the list (140) and to forward a query to said at least one search service.
